# EUROPEAN PATENT APPLICATION

(11) **EP 4 782 268 A1**
(43) Date of publication of application: **29.07.2026**
(21) Application number: 25208562.6
(22) Date of filing: 14.10.2025
(51) Int. Cl.: B60N 2/015, B60N 2/06

(54) **TRACK ASSEMBLY INCLUDING SEAT ASSEMBLY**

(30) Priority: 27.01.2025 US 202519037812
(71) Applicant: Lear Corporation, Southfield, MI 48033 (US)
(72) Inventor: Moulin, Antoine, 42230 Roche-la-Molière (FR); Iecker, Julien, 42230 Roche-la-Molière (FR)
(74) Representative: Grünecker Patent- und Rechtsanwälte PartG mbB

(57) **Abstract**

A seat assembly, comprising: a seat frame; an anchor movably coupled with the seat frame; a roller bracket rotatably coupled with the seat frame; a roller rotatably coupled with the roller bracket; wherein the roller bracket is rotatable between a first position and a second position; in the first position, the roller bracket is disposed at a greater height than a bottom edge of the seat frame; and in the second position, a portion of the roller bracket is disposed at a lower height than the bottom edge of the seat frame.

## Description

### TECHNICAL FIELD

The present disclosure generally relates to track assemblies and seat assemblies, including track assemblies and seat assemblies that can, for example, be utilized in connection with vehicles.

### BRIEF DESCRIPTION OF THE DRAWINGS

While the claims are not limited to a specific illustration, an appreciation of various aspects may be gained through a discussion of various examples. The drawings are not necessarily to scale, and certain features may be exaggerated or hidden to better illustrate and explain an innovative aspect of an example. Further, the exemplary illustrations described herein are not exhaustive or otherwise limiting, and embodiments are not restricted to the precise form and configuration shown in the drawings or disclosed in the following detailed description. Exemplary illustrations are described in detail by referring to the drawings as follows:
**FIG. 1** is a perspective view generally illustrating portions of an embodiment of a track assembly according to teachings of the present disclosure.
**FIG. 2** is a cross-sectional view generally illustrating portions of an embodiment of a track assembly according to teachings of the present disclosure.
**FIG. 3** is a perspective view generally illustrating portions of an embodiment of a seat assembly of a track assembly according to teachings of the present disclosure.
**FIG. 4** is a perspective view generally illustrating portions of an embodiment of a seat assembly of a track assembly according to teachings of the present disclosure.
**FIG. 5** is a perspective view generally illustrating portions of an embodiment of a track assembly according to teachings of the present disclosure.
**FIG. 6** is a perspective view generally illustrating portions of an embodiment of a track assembly according to teachings of the present disclosure.
**FIG. 7** is a cross-sectional view generally illustrating portions of an embodiment of a track assembly according to teachings of the present disclosure.
**FIG. 8** is a cross-sectional view generally illustrating portions of an embodiment of a track assembly according to teachings of the present disclosure.
**FIG. 9** is a perspective view generally illustrating an embodiment of a roller bracket and a roller according to teachings of the present disclosure.
**FIG. 10** is a perspective view generally illustrating an embodiment of a roller bracket and a roller according to teachings of the present disclosure.
**FIG. 11** is a cross-sectional view generally illustrating portions of an embodiment of a track assembly according to teachings of the present disclosure.
**FIG. 12** is a side view generally illustrating portions of an embodiment of a track assembly according to teachings of the present disclosure.
**FIG. 13** is a side view generally illustrating portions of an embodiment of a track assembly according to teachings of the present disclosure.
**FIG. 14** is a side view generally illustrating portions of an embodiment of a track assembly according to teachings of the present disclosure.
**FIG. 15** is a cross-sectional view generally illustrating portions of an embodiment of a track assembly according to teachings of the present disclosure.
**FIG. 16** is a perspective view generally illustrating portions of an embodiment of a track assembly according to teachings of the present disclosure.
**FIG. 17** is a flow diagram generally illustrating an embodiment of a method of operating a track assembly according to teachings of the present disclosure.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

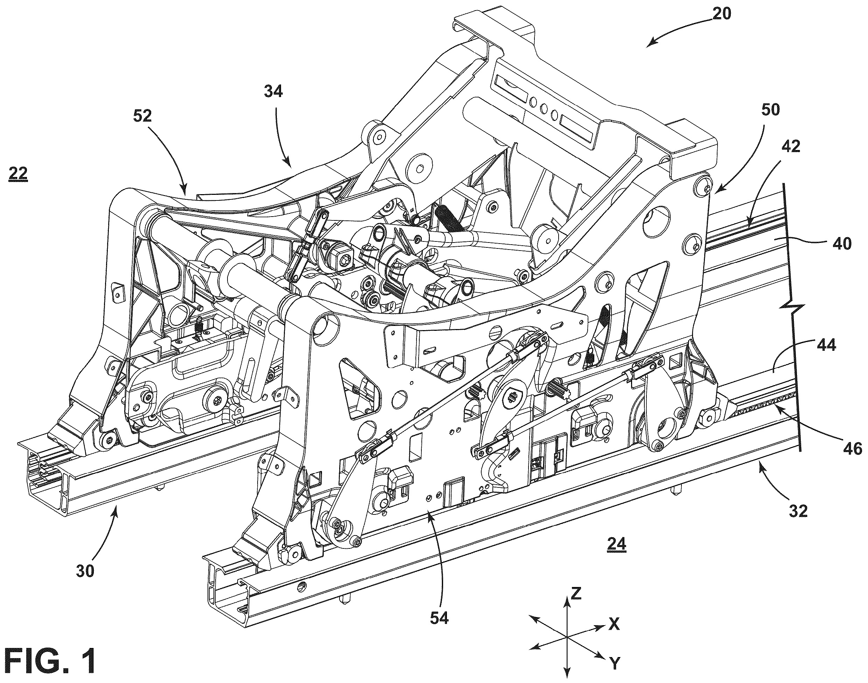

Referring to FIG. 1, a track assembly 20 is illustrated in a vehicle 22, but is not limited to vehicle applications. The track assembly 20 includes a first track 30, a second track 32, and a seat assembly 34. The seat assembly 34 is configured for selective engagement with, movement along, and removal (e.g., vertical removal) from the track assembly 20. The track assembly 20 is shown mounted to a mounting surface 24, such as a floor of the vehicle 22. The track assembly 20 is mounted on top of or partially in the mounting surface 24.

The first track 30 and the second track 32 include U-shaped profiles, are disposed parallel to each other and a longitudinal direction X, and are spaced from each other in a lateral direction Y. The first track 30 includes a first upper surface 40 with a first gap 42 that extends along the length of the first track 30 in the longitudinal direction X and separates portions of the first upper surface 40 in the lateral direction Y. The second track 32 includes a second upper surface 44 and a second gap 46 that extends along the length of the second track 32 in the longitudinal direction X and separates portions of the second upper surface 44 in the lateral direction Y. The seat assembly 34 includes a seat frame 50 including a first side member 52 and a second side member 54 laterally spaced from the first side member 52. In the illustrated configuration, the first side member 52 is engaged with the first track 30, and the second side member 54 is engaged with the second track 32. The seat assembly 34 is reversible such that the first side member 52 can engage the second track 32 and the second side member 54 can engage the first track 30.

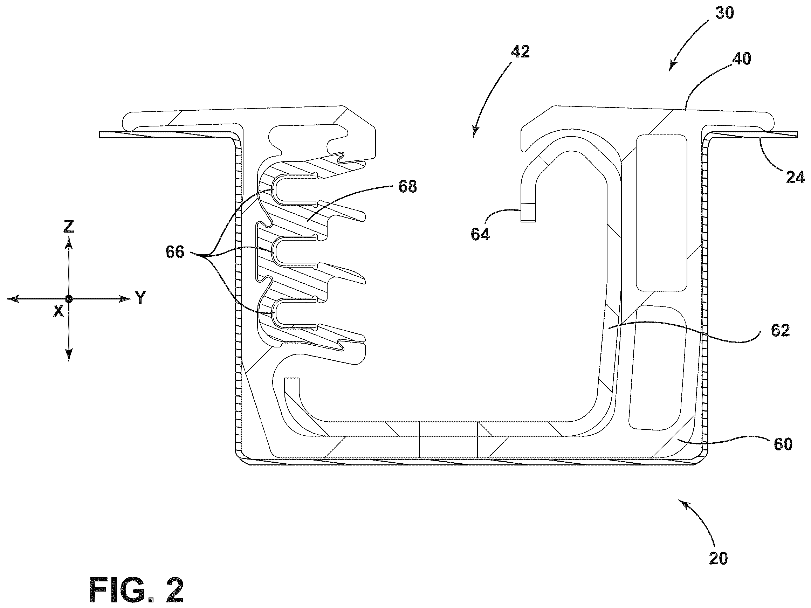

Referring to FIG. 2, a cross-sectional view of the first track 30 of the track assembly 20 is illustrated. The second track 32 (FIG. 1) includes a mirrored configuration of the first track 30. The first track 30 includes an outer profile 60 that defines the upper surface 40 and the first gap 42, and includes a U-shaped configuration that opens upward. The first track 30 includes an inner profile 62 that includes an L-shaped configuration and a plurality of teeth 64 that extend downward in a vertical direction Z for engagement with the seat assembly 34 (FIG. 1). The inner profile 62 is disposed in the outer profile 60. Optionally, the inner profile 62 comprises a stronger material (e.g., steel) than the outer profile 60 (e.g., aluminum). The first track 30 includes a set of electrical conductors 66, such as U-shaped bus bars, and an insulator 68 electrically insulating the set of electrical conductors 66 from the outer profile 60. In the illustrated example, the set of conductors 66 includes three conductors.

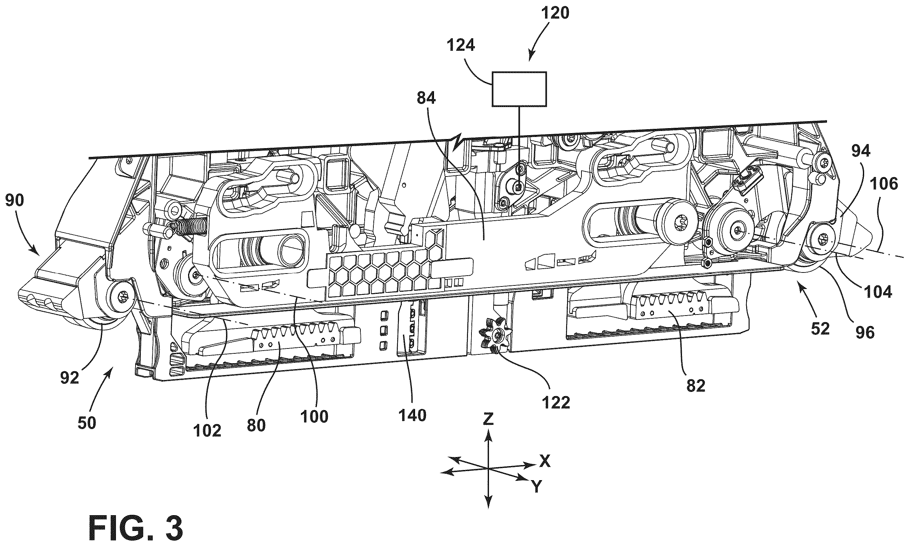

Referring to FIG. 3, portions of the first side member 52 of the seat frame 50 of the seat assembly 34 are illustrated. The seat assembly 34 includes a first anchor 80 and/or a second anchor 82 movably coupled with the seat frame 50, such as with the first side member 52. The first anchor 80 and the second anchor 82 are movable to selectively engage the first track 30 or the second track 32 (FIG. 1), such as the teeth 64 of the inner profile 62 (FIG. 2). For example, the first and second anchors 80, 82 are movable in the vertical direction Z into and out of an engaged position in which the first and second anchors 80, 82 are engaged with the teeth 64 (FIG. 2), and are movable in the lateral direction Y into and out of an aligned position relative to the teeth 64 (FIG. 2). In the engaged position, the first and second anchors 80, 82 are at a greater height than in an unaligned position and an aligned/disengaged position in which the first and second anchors are disengaged from the teeth 64 (FIG. 2). In the aligned position, the first and second anchors 80, 82 are disengaged from the teeth 64 (FIG. 2) and at least partially aligned in the lateral direction Y with the teeth 64 (e.g., at least partially overlapping in the vertical direction Z). In an unaligned position, the first and second anchors 80, 82 are offset from the teeth 64 in the lateral direction Y (e.g., without overlapping in the vertical direction Z). In the aligned position, the first and second anchors 80, 82 are movable vertically upward into the engaged position and movable laterally away from the teeth 64 (FIG. 2) to the unaligned position. The first and second anchors 80, 82 are movable out of alignment with the teeth 64 (FIG. 2) to the unaligned position to facilitate vertical removal from and vertical insertion into the first track 30 or the second track 32. The lateral movement of the first and second anchors 80, 82 optionally comprises rotational movement about an axis parallel with the longitudinal direction X and/or aligned in an X-Z plane. A slider 84 is slidably coupled with the seat frame (e.g., with the first side member 52) such that sliding movement of the slider 84 causes movement (e.g., vertical and/or lateral) of the first and second anchors 80, 82. For example, one or more protrusions of the first and second anchors 80, 82 extend into corresponding slots of the slider 84 (or vice versa).

The seat assembly 34 includes a first roller bracket 90, a first roller 92, a second roller bracket 94, and/or a second roller 96. The first roller bracket 90 is rotatably coupled with the seat frame 50 at a first axis 100, such as at a front end of the first side member 52. The first roller 92 is rotatably coupled with the first roller bracket 90 such that the first roller 92 is rotatable relative to the first roller bracket 90 about a second axis 102 and is rotatable with the first roller bracket 90 relative to the seat frame 50 about the first axis 100. The second roller bracket 94 is rotatably coupled with the seat frame 50 at a third axis 104, such as at a rear end of the first side member 52. The second roller 96 is rotatably coupled with the second roller bracket 94 such that the second roller 96 is rotatable relative to the second roller bracket 94 about a fourth axis 106 and is rotatable with the second roller bracket 94 relative to the seat frame about the third axis 104.

Optionally, the seat assembly 34 includes a drive assembly 120 including a pinion 122 movably coupled with the seat frame 50. The pinion 122 is movable to selectively engage the teeth 64 (FIG. 2) such that rotation of the pinion 122 causes movement (e.g., sliding/rolling movement in the longitudinal direction X) of the seat assembly 34 along the first track 30 (FIG. 2). The drive assembly 120 includes a motor 124 (e.g., an electric motor) operably coupled with the pinion 122 to cause rotation of the pinion 122 and movement of the seat assembly 34 along the first track 30 and/or the second track 32 (FIG. 1).

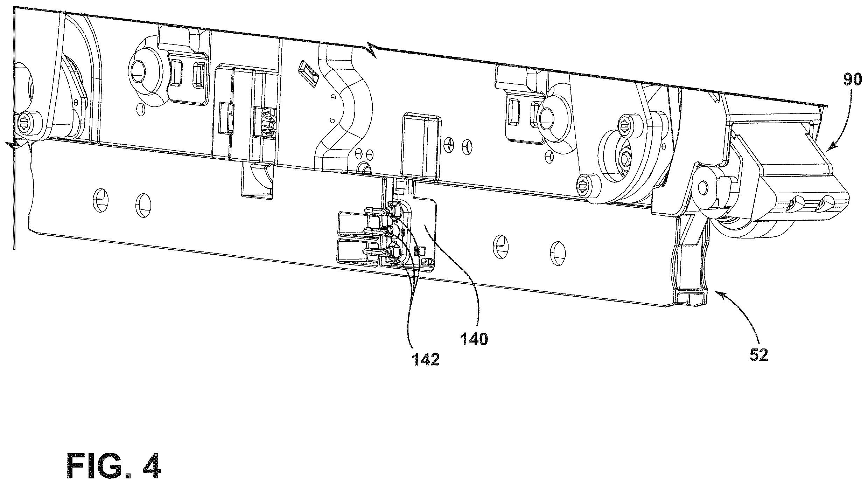

The seat assembly 34 includes an electrical connector 140 that is movably coupled with the seat frame 50, such as with the first side member 52. The electrical connector 140 is, for example, rotatable about an axis parallel with the vertical direction Z between an engaged position in which the electrical connector 140 is engaged with and electrically connected with the set of conductors 66 (FIG. 2), and a disengaged position in which the electrical connector 140 is disengaged from the conductors 66 to facilitate the seat assembly 34 being vertically removed from and vertical inserted into the first track 30 and/or the second track 32. The angular difference between the engaged and disengaged positions is, for example, 80 degrees to 100 degrees, such as 90 degrees. As shown in FIG. 4, the electrical connector 140 includes a set of electrical contacts 142 that electrically connect with the set of conductors 66. In the illustrated example, the set of electrical contacts 142 includes three contacts, one for each conductor of the set of conductors 66.

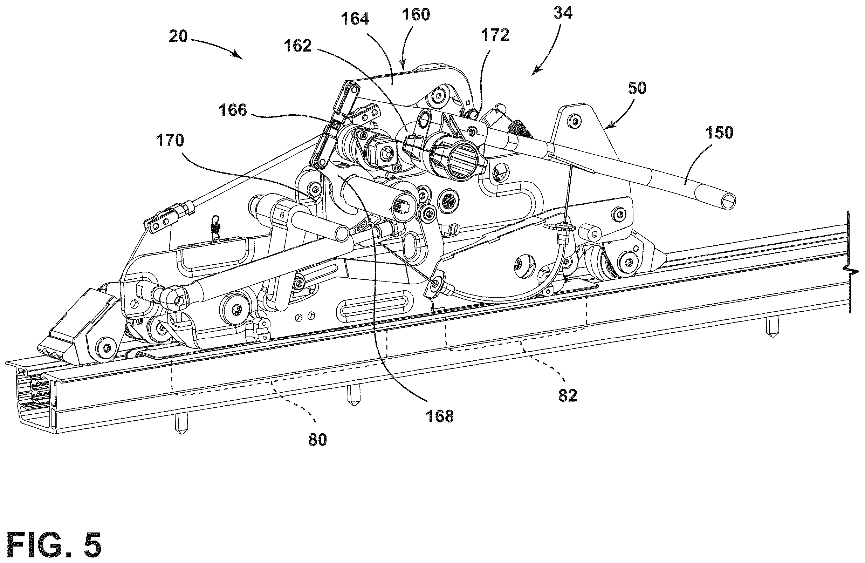

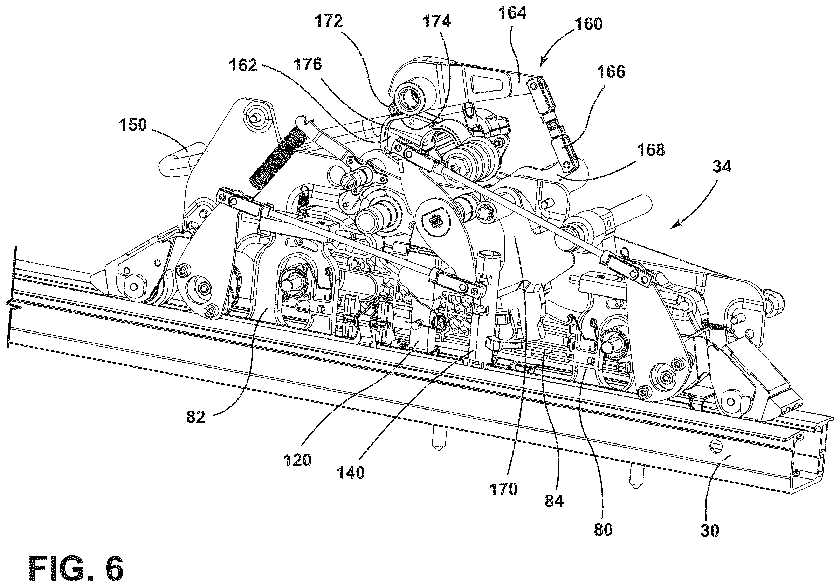

Referring to FIGS. 5 and 6, the seat assembly 34 includes a handle 150 operably coupled with the first and second anchors 80, 82, such as to control, at least in part, movement of the first and second anchors 80, 82 between the engaged position, the aligned position, and the unaligned position. The handle 150 is operably coupled with the first and second anchors 80, 82 via an anchor linkage 160. The anchor linkage 160 includes a cam 162 coupled to the handle 150, a first lever 164 rotatably coupled to the seat frame 50, a rod 166 coupled to the first lever 164, a second lever 168 coupled to the rod 166, and/or a third lever 170 coupled to the second lever 168. The third lever 170 is movable to engage and cause movement of the slider 84 (FIG. 6). In the illustrated example, the cam 162 is coupled to rotate with the handle 150. The first lever 164 includes a first end 172 that is in contact with and rolls along the cam 162 as the cam 162 rotates with the handle 150.

Referring to FIG. 6, the cam 162 of the anchor linkage 160 includes a variable diameter section 174 and a constant diameter section 176. In a default position (e.g., an unactuated position) of the handle 150, the first end 172 is in contact with the variable diameter section 174 such that rotation of the handle 150 toward an actuated position causes the first end 172 to roll along variable diameter section 174 toward the constant diameter section 176, which causes rotation of the first lever 164. Continued rotation of the handle 150 causes the first end 172 to move into contact with the constant diameter section 176. With the first end 172 in contact with the constant diameter section 176, rotation of the handle 150 does not cause material rotation of the first lever 164. Rotation of the first lever 164 moves the rod 166, which causes rotation of the second lever 168, which causes rotation of the third lever 170, and rotation of the third lever 170 moves the slider 84. Movement of the slider 84 via the third lever 170 moves the first and second anchors 80, 82 from the engaged position to the aligned position, and/or from the aligned position to the unaligned position. Rotation of the third lever 170 causes rotation of the electrical connector 140, at least in some circumstances. For example, the third lever 170 is initially offset from the electrical connector 140 such that initial rotation of the third lever 170 does not cause rotation of the electrical connector 140 and further rotation of the third lever 170 does cause rotation of the electrical connector 140. The offset allows for movement of the third lever 170 to cause movement of the slider 84 to disengage the first and second anchors 80, 82 to allow longitudinal movement of the seat assembly 34 along the first track 30 and/or the second track 32 without disengaging the electrical connector 140 from the set of conductors 66 (FIG. 2).

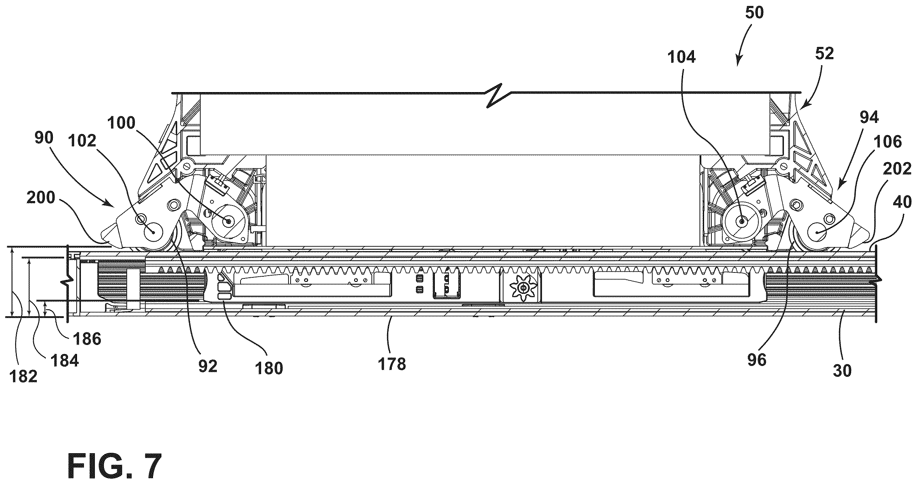

Referring to FIG. 7, the first and second roller brackets 90, 94 are shown in first positions with the first and second rollers 92, 96 in contact with the first track 30. In the first positions, the first axis 100 is at a greater height than the second axis 102, and the third axis 104 is at a greater height than the fourth axis 106, relative to the mounting surface 24 and/or a lower wall 178 of the first track 30. The seat frame 50 includes a bottom edge 180 that is the lowest part of the seat frame 50. With the first side member 52 of the seat frame 50 connected to the first track 30, for example, the bottom edge 180 is disposed in the first track 30 at a lower height than the upper surface 40. In the first positions of the first and second roller brackets 90, 94, the first and second roller brackets 90, 94 and/or the first and second rollers 92, 96 are disposed at a greater height than the bottom edge 180 of the seat frame 50. For example, the first and second roller brackets 90, 94 are disposed at a first height 182, the first and second rollers 92, 96 are disposed at a second height 184 that is less than or equal to the first height 182, and the bottom edge 180 is disposed at a third height 186 that is less than the first height 182 and the second height 184. The heights 182, 184, 186 are, for example, measured from lowest points of the first and second roller brackets 90, 94, the first and second rollers 92, 96, and the bottom edge 180, respectively. The first and second roller brackets 90, 94 include lift surface 200, 202, respectively, configured to contact first track 30 and/or the second track 32 (FIG. 1), such as the upper surfaces 40, 44. In the first positions of the first and second roller brackets 90, 94, the lift surfaces 200, 202 are offset from the first track 30 or the second track 32 (e.g., above the upper surface 40 or the upper surface 42). Optionally, the lift surfaces 200, 202 comprise different materials than the first and second roller brackets 90, 94. For example, the lift surfaces 200, 202 comprise a rubber material, a polymeric material, or both, and the first and second roller brackets 90, 94 comprise metal, such as aluminum and/or steel.

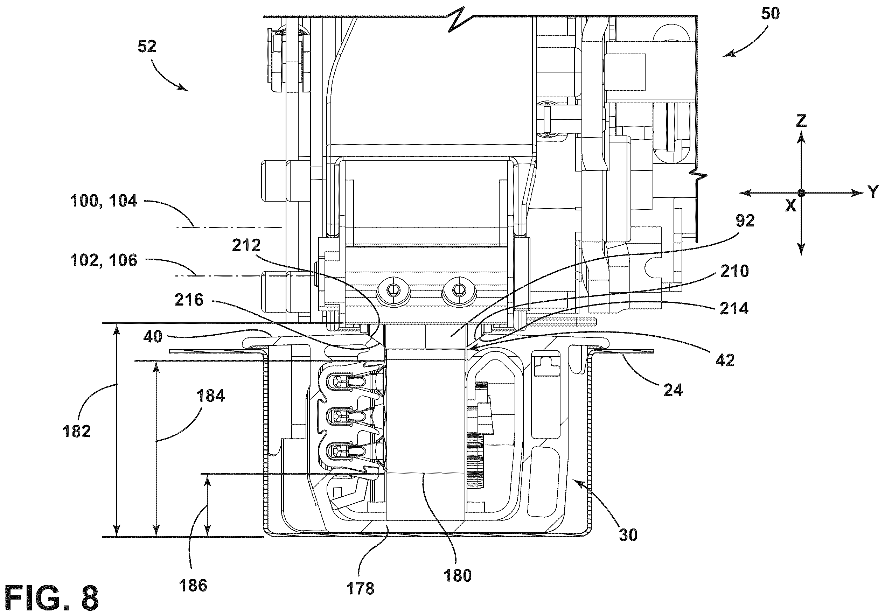

Referring to FIG. 8, the first side member 52 is illustrated connected to the first track 30. The first roller 92 is disposed in contact with the upper surface 40 and partially in the first gap 42. In the illustrated example, the first roller 92 includes a pair of angled (e.g., ramped) portions 210, 212 that contact and roll along corresponding angled sections 214, 216 of the upper surface 40. For example, the first roller 92 can include a dual conical configuration. The angled sections 214, 216 are angled above a horizontal plane (e.g., an X-Y plane), are angled relative to the lateral direction Y, and/or are parallel with the longitudinal direction X. The heights 182, 184, 186 are further illustrated in FIG. 8.

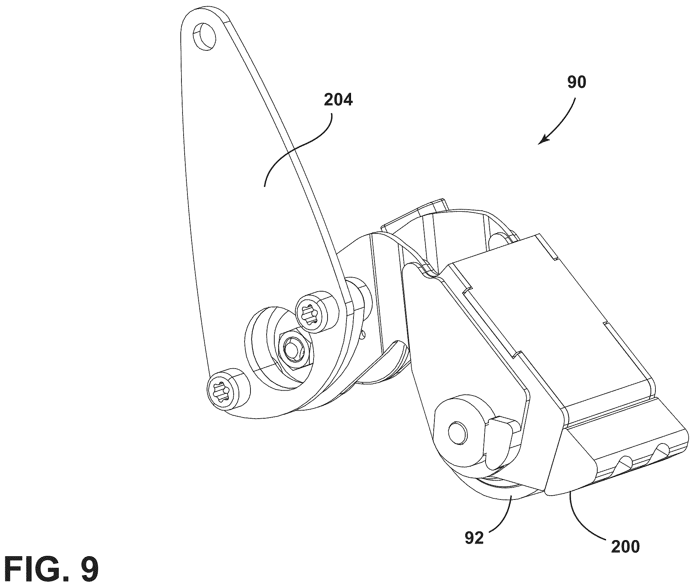

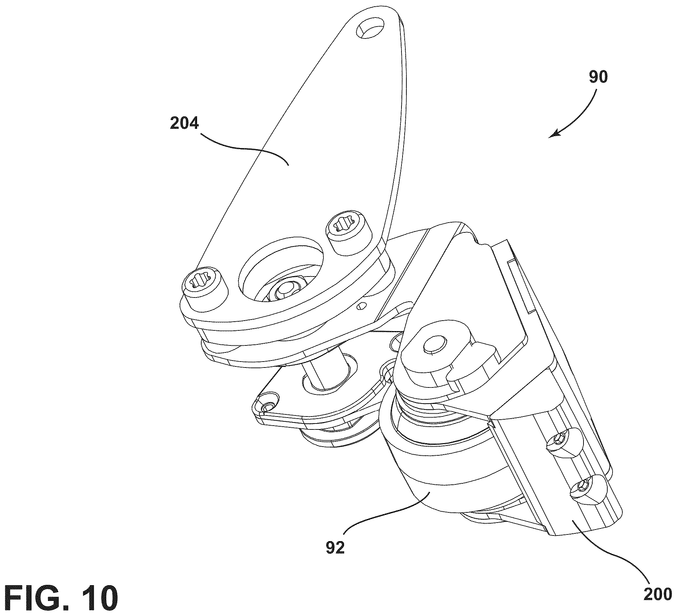

Referring to FIGS. 9 and 10, perspective views illustrate the first roller bracket 90 and the first roller 92 rotatably coupled thereto. The second roller bracket 94 (FIG. 7) includes the same or a mirrored configuration. The first roller bracket 90 includes the lift surface 200, which is provided as a triangular bumper mounted to the first roller bracket 90. The first roller bracket 90 includes a V-shaped configuration that opens downward, at least in a first position of the first roller bracket 90, and includes an extension 204.

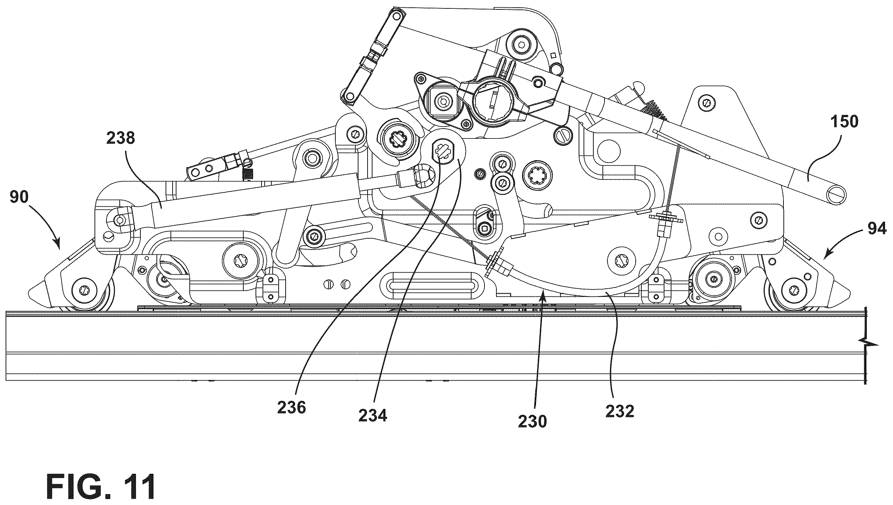

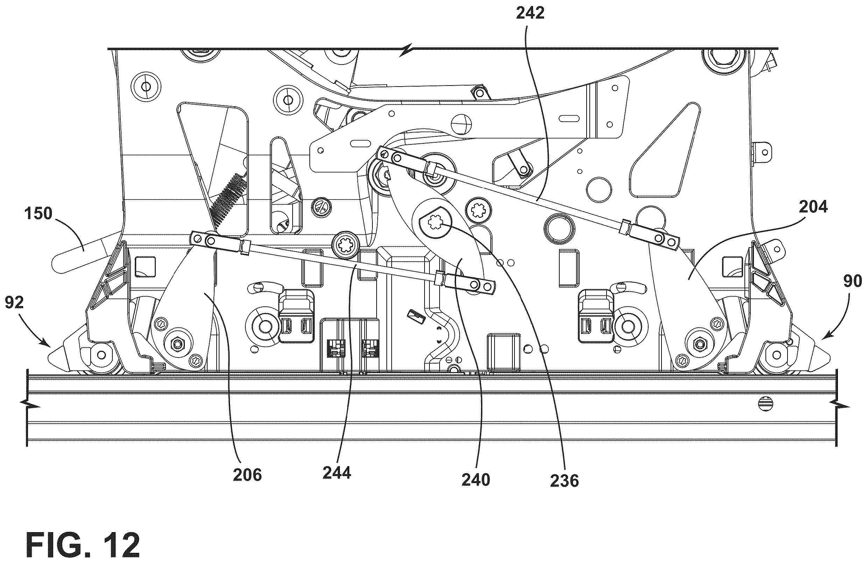

Referring to FIGS. 11 and 12, the seat assembly 34 includes a roller linkage 230 that operably couples the handle 150 with the roller brackets 90, 94. Referring to FIG. 11, the roller linkage 230 includes a cable 232 (e.g., a Bowden cable) and a first lever 234 rotatably coupled with the seat frame 50 via a shaft 236 The cable 232 is coupled to the handle 150 and to the first lever 234 such that rotation of the handle 150 causes rotation of the first lever 234, which causes rotation of the shaft 236. Optionally, the seat assembly 34 includes a spring 238. In the illustrated example, the spring 238 comprises a gas spring that is coupled to the first lever 234 and/or the shaft 236, and biases the first lever 234 to reduce a pulling force involved with actuating the handle 150. The spring 238 additionally or alternatively comprises one or more other springs (e.g., coil springs, leaf springs, strip springs) coupled to the first and second roller brackets 90, 94.

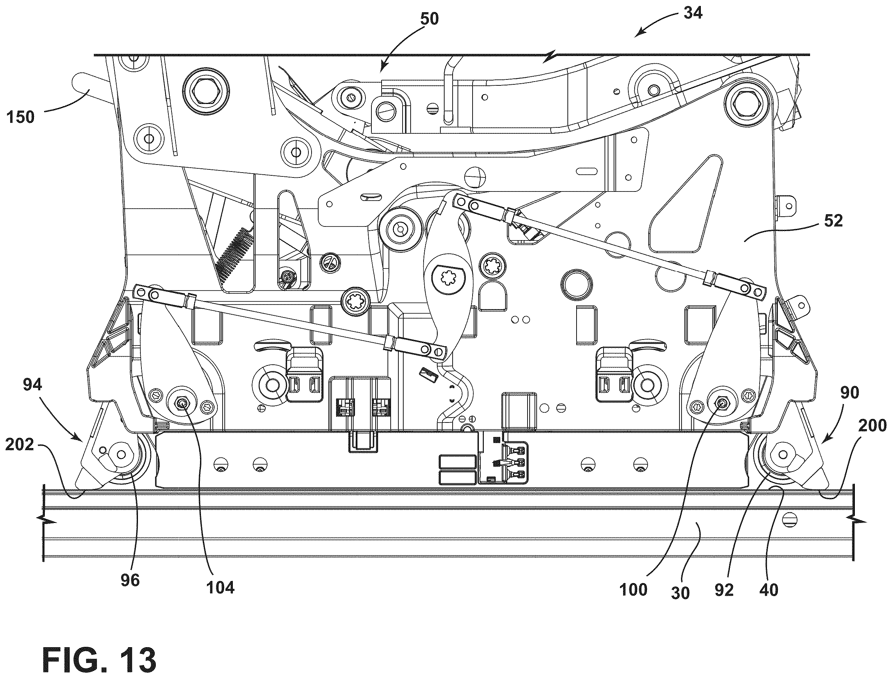

Referring to FIG. 12, the roller linkage 230 further includes a second lever 240 coupled to rotate with the shaft 236, a first rod 242 coupled to the second lever 240 and the first roller bracket 90 (e.g., to the extension 204), and a second rod 244 coupled to the second lever 240 and the second roller bracket 94 (e.g., to an extension 206 thereof). The first rod 242 is coupled with the first roller bracket 90 and the second rod 244 is coupled with the second roller bracket 94 such that rotation of the shaft 236 and the second lever 240 causes rotation (e.g., simultaneous rotation) of the first and second roller brackets 90, 94 between the first positions shown in FIGS. 11 and 12, and second positions shown in FIG. 13.

Referring to FIG. 13, the seat assembly 34 is illustrated in a lifted position, which includes the first and second roller brackets 90, 94 in the second positions (e.g., lifted positions) with the lift surfaces 200, 202 in contact with the upper surface 40 of the first track 30. Rotating the first and second roller brackets 90, 94 from the first positions to the second positions rotates the lift surfaces 200, 202 onto the upper surface 40, which lifts the first side member 52 upward such that the bottom edge 180 is disposed above the first track 30. In the second position of the first and second roller brackets 90, 94, the seat assembly 34 is at least partially supported by the lift surfaces 200, 202 and not by the first and second rollers 92, 96. A rotational difference between the first positions and the second positions (e.g., about the first axis 100 and the third axis 104) of the first and second roller brackets 90, 94 is, for example, at least 20 degrees and less than or equal to 45 degrees, such as 30-35 degrees.

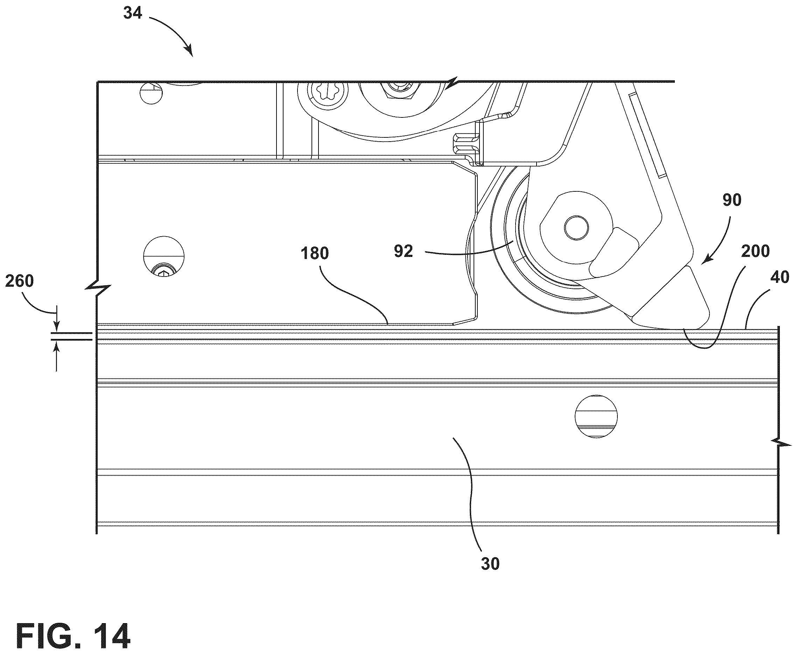

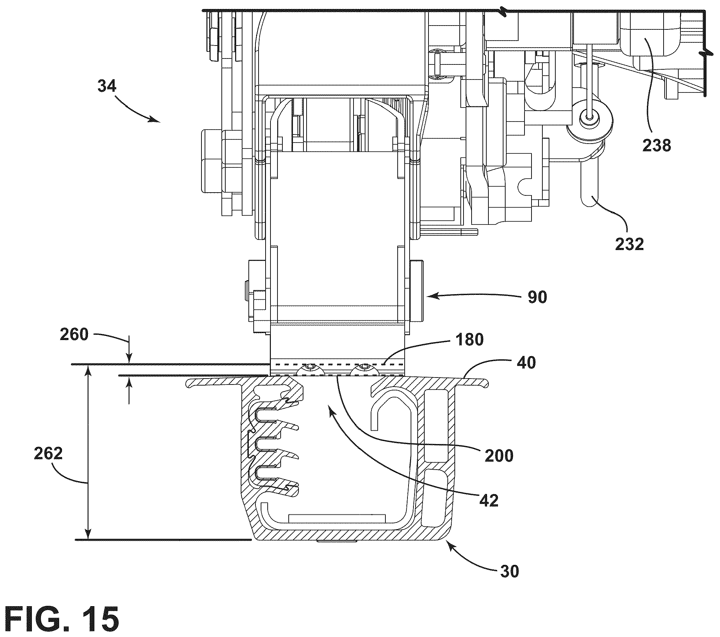

As illustrated in FIGS. 14 and 15, in the lifted position of the seat assembly 34, the bottom edge 180 is offset above the upper surface 40 by a distance 260. The distance 260 is, for example, greater than 0 mm and less than or equal to 10 mm. The offset provided by the distance 260 is configured to facilitate movement of the seat assembly 34 relative to the first and second tracks 30, 32 other than sliding movement. For example, the offset provided by the distance 260 is configured to facilitate movement of the seat assembly 34 in the lateral direction Y, such as for removal of the seat assembly 34 from the vehicle 22 (FIG. 1), movement of the seat assembly 34 for connection with one or more other tracks, and/or rotation of the seat assembly 34, such as for changing the orientation of the seat assembly 34 from forward facing to rearward facing. The spring 238 (FIG. 15) is configured to facilitate movement (e.g., rotation) of the first and second roller brackets 90, 94 from the first positions to the second positions to facilitate lifting of the seat assembly 34 above the first track 30 (e.g., up the upper surface 40) by the distance 260. The spring 238 biases the first and second roller brackets 90, 94 toward the second positions, and the spring 238 is configured to support at least a portion of a weight of the seat assembly 34, such as 70%-90% of the weight of the seat assembly 34. For example, a spring constant and associated spring force of the spring 238 correspond to the weight of the seat assembly 34. With such configurations, a user can supply a force corresponding to, for example, 10%-30% of the weight of the seat assembly 34 to the handle 150, instead of the full weight of the seat assembly 34, to move the seat assembly 34 to the lifted position. Additionally or alternatively, the weight of the seat assembly 34 is sufficient to overcome the spring force such that the seat assembly 34 will lower into the first track 30 and/or the second track 32 without external downward forces (e.g., without a user pushing downward on the seat assembly 34).

Referring to FIG. 15, in the lifted position of the seat assembly 34, which corresponds to the first roller bracket 90 (and the second roller bracket 94 - FIG. 14) being in the second position, the bottom edge 180 of the seat assembly 34 is disposed at a greater height than with the seat assembly 34 in the lowered position. For example, in the lifted position, the bottom edge 180 is disposed at a lifted height 262 (e.g., a second seat assembly height) that is greater than the third height 186 (e.g., a first seat assembly height - FIG. 8) of the bottom edge 180 in the lowered position. Optionally, a difference between the height of the seat assembly 34 between the lowered and lifted positions (e.g., the difference between the third height 186 and the lifted height 262) is at least 30 mm and less than or equal to 50 mm. In the second position of the first roller bracket 90, the lift surface 200 extends across the gap 42 and is in contact with the upper surface 40 at both sides of the gap 42. The lift surface 202 of the second roller bracket 94 (FIG. 14) also extends across the gap 42 and is in contact with the upper surface 40 at both sides of the gap 42, with the roller 92 spaced from (e.g., spaced above) and not in contact with the upper surface 40.

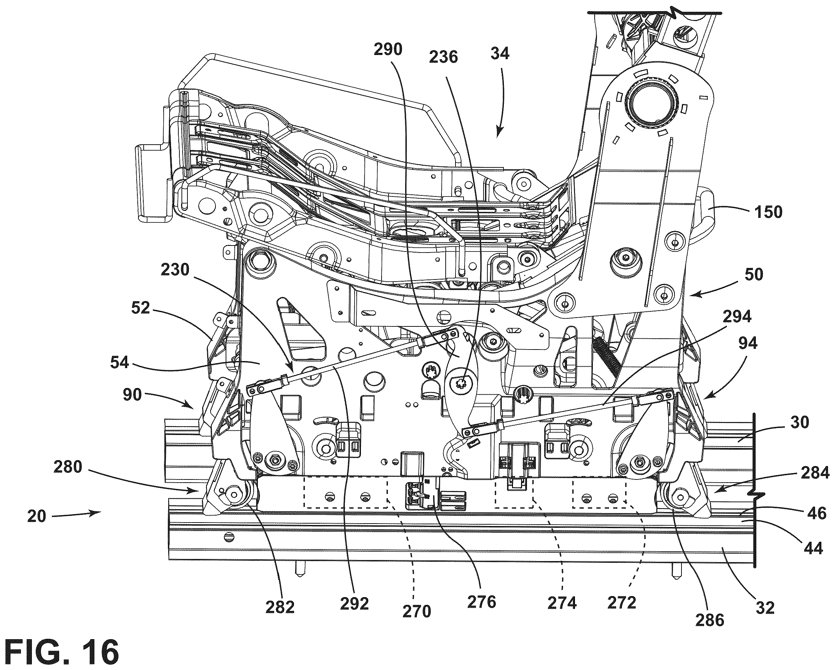

Referring to FIG. 16, the second side member 54 optionally comprises a mirrored configuration of the first side member 52. For example, a third anchor 270 and a fourth anchor 272 are movably connected to the second side member 54 to engage the second track 32 or the first track 30, a second pinion 274 is movably coupled to the second side member 54 to selectively engage the second track 32 or the first track 30, a second electrical connector 276 is movably connected to the second side member 54 to electrically connect with the second track 32 or the first track 30, a third roller bracket 280 is rotatably coupled to the second side member 54, a third roller 282 is rotatably coupled to the third roller bracket 280, a fourth roller bracket 284 is rotatably coupled to the second side member 54, and/or a fourth roller 286 is rotatably coupled to the fourth roller bracket 284. The anchor linkage 160 (FIG. 5) is operably coupled to the third and fourth anchors 270, 272 such that the third and fourth anchors 270, 272 are actuated with the first and second anchors 80, 82, respectively. The motor 124 of the drive assembly 120 (FIG. 3) is operably coupled with the second pinion 274 such that the pinion 122 (FIG. 3) and the second pinion 274 are driven together. The roller linkage 230 is operably coupled with the third and fourth roller brackets 280, 284 such that all of the first, second, third, and fourth roller brackets 90, 94, 280, 284 are actuated together upon actuation of the handle 150. For example, the roller linkage 230 further comprises a third lever 290 coupled to rotate with the shaft 236 (e.g., a synchronization shaft), a third rod 292 coupled with the third roller bracket 284, and/or a fourth rod 294 coupled with the fourth roller bracket 284. With such a configuration, actuation of the handle 150 can (e.g., simultaneously) lift the first side member 52 out of the first track 30 and lift the second side member 54 out of the second track 32 such that the seat assembly 34 is disposed at the distance 260 (FIG. 15) above the first track 30 and the second track 32 and the seat assembly is movable in the transverse direction Y. In the lowered position of the seat assembly 34 (e.g., with the roller brackets 90, 94, 280, 284 in the first positions) and with the second side member 54 partially in the second track 32, the third and fourth rollers 282, 286 are disposed partially in the second gap 46 and are in contact with the upper surface 44 of the second track 32

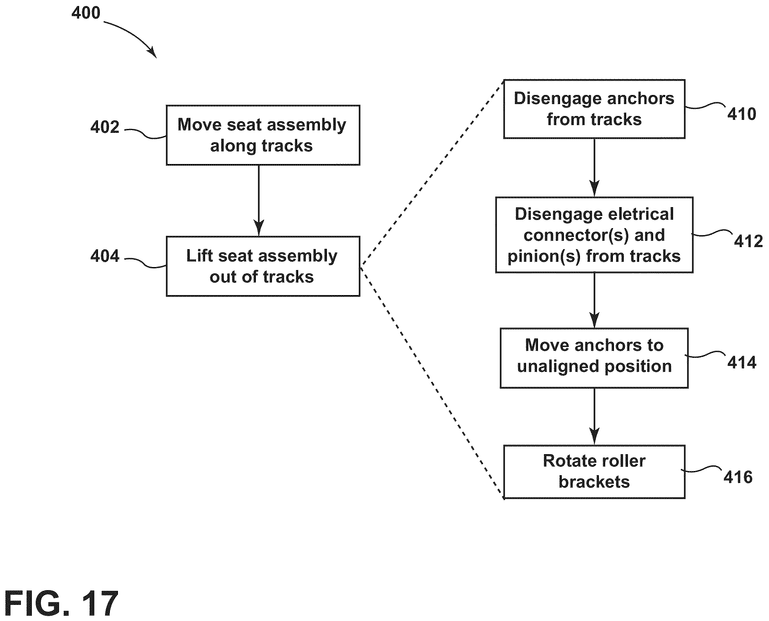

A method 400 of operating a track assembly, such as the track assembly 20 and components thereof illustrated in FIGS. 1-16, is illustrated in FIG. 17. The method 400 includes moving (e.g., sliding) the seat assembly 34 along the first and second tracks 30, 32 (block 402), such as to various comfort positions for an occupant. The movement of block 402 is, for example, conducted via operation of the drive assembly 120, disengaging the anchors 80, 82, 270, 272 from the first and second tracks 30, 32, and/or the rollers 92, 96, 282, 286 rolling along the upper surfaces 40, 44. The method 400 includes lifting the seat assembly 34 from the first track 30 and the second track 32 (block 404), such as to tum the seat assembly 34 around, remove the seat assembly 34 from the vehicle 22, and/or to connect the seat assembly 34 to one or more other tracks. Optionally, lifting the seat assembly 34 in block 404 includes actuating the handle 150 from a default position toward an actuated position. The initial actuation of the handle 150 causes the anchors 80, 82, 270, 272 to move from engaged positions to aligned positions, such as via the anchor linkage 160 (block 410). Further actuation of the handle 150 causes rotation of the electrical connector 140 and/or the pinions 122, 274 out of engagement with the first track 30 and the second track 32 (block 412). Still further actuation of the handle 150 causes the anchors 80, 82, 270, 272 to move from the aligned position to the unaligned position (block 414). Yet further actuation of the handle 150 causes rotation of the roller brackets 90, 94, 280, 284, such as via the roller linkage 230, which lifts the seat assembly 34 out of the first and second tracks 30, 32 to the lifted position (block 416). Optionally, in the lifted position, the only portions of the seat assembly 34 in contact with the first and second tracks 30, 32 are the roller brackets 90, 94, 280, 284 or lift surfaces thereof (e.g., lift surfaces 200, 202). The cam 162 includes the constant diameter section 176 such that the further actuation of the handle 150 in block 416 after the anchors 80, 82, 270, 272 are in the unaligned position (e.g., in block 414) does not cause further movement of the anchors 80, 82, 270, 272. The spring 238 acts on the handle 150 and/or on the roller brackets 90, 94, 280, 284 to reduce a minimum force involved in moving the handle 150 from the default position to the actuated position.

The instant disclosure includes the following non-limiting embodiments:

A seat assembly, comprising: a seat frame; an anchor movably coupled with the seat frame; a roller bracket rotatably coupled with the seat frame; a roller rotatably coupled with the roller bracket; wherein the roller bracket is rotatable between a first position and a second position; in the first position, the roller bracket is disposed at a greater height than a bottom edge of the seat frame; and in the second position, a portion of the roller bracket is disposed at a lower height than the bottom edge of the seat frame.

The seat assembly of any preceding embodiment, further comprising a handle rotatably coupled with the seat frame and operably coupled with the anchor and the roller bracket.

The seat assembly of any preceding embodiment, wherein the handle is operably coupled with the anchor via an anchor linkage and is operably coupled with the roller bracket via a roller linkage.

The seat assembly of any preceding embodiment, wherein the roller linkage includes a synchronization shaft and a cable coupling the handle with the synchronization shaft.

The seat assembly of any preceding embodiment, further comprising a slider slidably coupled with the seat frame and movable to actuate the anchor; wherein the anchor linkage comprises: a cam coupled to the handle, a first lever rotatably coupled to the seat frame, a rod coupled to the first lever, a second lever coupled to the rod, and a third lever coupled to the second lever and movable to engage the slider.

The seat assembly of any preceding embodiment, wherein the cam comprises a variable diameter section and a constant diameter section; in the first position of the roller bracket, the first lever is in contact with the variable diameter section; and in the second position of the roller bracket, the first lever is in contact with the constant diameter section.

The seat assembly of any preceding embodiment, further comprising an electrical connector; wherein the third lever is configured to cause rotation of the electrical connector.

The seat assembly of any preceding embodiment, wherein the roller bracket is rotatable relative to the seat frame about a first axis; the roller is rotatable about a second axis relative to the roller bracket; and the roller is rotatable with the roller bracket relative to the seat frame about the first axis.

The seat assembly of any preceding embodiment, wherein, in the second position of the roller bracket, the second axis is lower than the first axis.

The seat assembly of any preceding embodiment, further comprising a spring biasing the roller bracket toward the second position.

The seat assembly of any preceding embodiment, wherein a spring constant of the spring corresponds to a weight of the seat assembly.

The seat assembly of any preceding embodiment, wherein the spring comprises a gas spring operably coupled with a synchronization shaft.

The seat assembly of any preceding embodiment, wherein the gas spring is configured to support at least 70% and less than or equal to 90% of a weight of the seat assembly.

The seat assembly of any preceding embodiment, wherein a difference between the first position and the second position of the roller bracket is at least 25 degrees and less than or equal to 45 degrees.

The seat assembly of any preceding embodiment, wherein: the seat frame includes a first side member and a second side member laterally spaced from the first side member; the roller bracket is a first roller bracket coupled to the first side member; the roller is a first roller; the seat assembly further comprises: a second roller bracket rotatably coupled to the first side member, a second roller rotatably coupled to the second roller bracket, a third roller bracket rotatably coupled to the second side member, a third roller rotatably coupled to the third roller bracket, a fourth roller bracket rotatably coupled to the second side member, and a fourth roller rotatably coupled to the fourth roller bracket; and the first roller bracket, the second roller bracket, the third roller bracket, and the fourth roller bracket are operably coupled together.

A track assembly, comprising: a first track including a first upper surface with a first gap; a second track including a second upper surface with a second gap; and the seat assembly of any preceding embodiment; wherein, in the first position of the first roller bracket: the first side member is disposed partially in the first track, the first roller and the second roller are disposed partially in the first gap and in contact with the first upper surface, the second side member is disposed partially in the second track, and the third roller and the fourth roller are disposed partially in the second gap and in contact with the second upper surface; and in the second position of the first roller bracket: the first side member is disposed above the first track, and the second side member is disposed above the second track.

The track assembly of any preceding embodiment, wherein the first roller bracket includes a lift surface; in the first position of the first roller bracket, the lift surface is offset from the first track; and in the second position of the first roller bracket, the lift surface extends across the first gap and is in contact with the first upper surface.

The track assembly of any preceding embodiment, wherein, in the first position of the first roller bracket, the seat frame is disposed at a first height relative to the first track; and in the second position of the first roller bracket, the seat frame is disposed at a second height relative to the first track that is greater than the first height.

The track assembly of any preceding embodiment, wherein a height difference between the first height and the second height is at least 30 mm and less than or equal to 50 mm.

A vehicle comprising the track assembly of any preceding embodiment.

A vehicle comprising the seat assembly of any preceding embodiment.

Various examples/embodiments are described herein for various apparatuses, systems, and/or methods. Numerous specific details are set forth to provide a thorough understanding of the overall structure, function, manufacture, and use of the examples/embodiments as described in the specification and illustrated in the accompanying drawings. It will be understood by those skilled in the art, however, that the examples/embodiments may be practiced without such specific details. In other instances, well-known operations, components, and elements have not been described in detail so as not to obscure the examples/embodiments described in the specification. Those of ordinary skill in the art will understand that the examples/embodiments described and illustrated herein are non-limiting examples, and thus it can be appreciated that the specific structural and functional details disclosed herein may be representative and do not necessarily limit the scope of the embodiments.

Reference throughout the specification to "examples, "in examples," "with examples," "in the illustrated example," "various embodiments," "with embodiments," "in embodiments," "an embodiment," "with some configurations," "in some configurations," or the like, means that a particular feature, structure, or characteristic described in connection with the example/embodiment is included in at least one embodiment. Thus, appearances of the phrases "examples, "in examples," "with examples," "in the illustrated example," "in various embodiments," "with embodiments," "in embodiments," "an embodiment," "with some configurations," "in some configurations," or the like, in places throughout the specification are not necessarily all referring to the same embodiment. Furthermore, the particular features, structures, and/or characteristics may be combined in any suitable manner in one or more examples/embodiments. Thus, the particular features, structures, or characteristics illustrated or described in connection with one embodiment/example may be combined, in whole or in part, with the features, structures, functions, and/or characteristics of one or more other embodiments/examples without limitation given that such combination is not illogical or non-functional. Moreover, many modifications may be made to adapt a particular situation or material to the teachings of the present disclosure without departing from the scope thereof. The word "exemplary" is used herein to mean "serving as a non-limiting example."

It should be understood that references to a single element are not necessarily so limited and may include one or more of such element, unless the context clearly indicates otherwise. Any directional references (e.g., plus, minus, upper, lower, upward, downward, left, right, leftward, rightward, top, bottom, above, below, vertical, horizontal, clockwise, and counterclockwise) are only used for identification purposes to aid the reader's understanding of the present disclosure, and do not create limitations, particularly as to the position, orientation, or use of examples/embodiments.

"One or more" includes a function being performed by one element, a function being performed by more than one element, e.g., in a distributed fashion, several functions being performed by one element, several functions being performed by several elements, or any combination of the above. The term "at least one of" in the context of, e.g., "at least one of A, B, and C" or "at least one of A, B, or C" includes only A, only B, only C, or any combination or subset of A, B, and C, including any combination or subset of one or a plurality of A, one or a plurality of B, and one or a plurality of C. A "set" of elements can include any number of one or more elements.

Although the terms first, second, etc. are, in some instances, used herein to describe various elements, these elements should not be limited by these terms. These terms are only used to distinguish one element from another. For example, a first element could be termed a second element, and, similarly, a second element could be termed a first element, without departing from the scope of the various described embodiments. The first element and the second element are both elements, but they are not the same element.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. The term "and/or" as used herein refers to and encompasses any and all possible combinations of one or more of the associated listed items. Uses of "and" and "or" are to be construed broadly (e.g., to be treated as "and/or"). For example and without limitation, uses of "and" do not necessarily require all elements or features listed, and uses of "or" are inclusive unless such a construction would be illogical. The terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Joinder references (e.g., attached, coupled, connected, and the like) are to be construed broadly and may include intermediate members between a connection of elements, relative movement between elements, direct connections, indirect connections, fixed connections, movable connections, operative connections, indirect contact, and/or direct contact. As such, joinder references do not necessarily imply that two elements are directly connected/coupled and in fixed relation to each other. Connections of electrical components, if any, may include mechanical connections, electrical connections, wired connections, and/or wireless connections, among others. Uses of "e.g." and "such as" in the specification are to be construed broadly and are used to provide non-limiting examples of embodiments of the disclosure, and the disclosure is not limited to such examples.

While processes, systems, and methods may be described herein in connection with one or more steps in a particular sequence, such methods may be practiced with the steps in a different order, with certain steps performed simultaneously, with additional steps, and/or with certain described steps omitted.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

References to a vehicle can include one or more of a variety of vehicles, including, without limitation, a passenger car (e.g., a sedan, a pickup truck, a sport utility vehicle, a crossover, etc.), a truck, a bus, a plane, or a boat, among others.

All matter contained in the above description or shown in the accompanying drawings shall be interpreted as illustrative only and not limiting. Changes in detail or structure may be made without departing from the present disclosure.

## Claims

1. A seat assembly, comprising:
a seat frame;
an anchor movably coupled with the seat frame;
a roller bracket rotatably coupled with the seat frame;
a roller rotatably coupled with the roller bracket;
wherein the roller bracket is rotatable between a first position and a second position;
in the first position, the roller bracket is disposed at a greater height than a bottom edge of the seat frame; and
in the second position, a portion of the roller bracket is disposed at a lower height than the bottom edge of the seat frame.

2. The seat assembly of claim 1, further comprising a handle rotatably coupled with the seat frame and operably coupled with the anchor and the roller bracket.

3. The seat assembly of claim 2, wherein the handle is operably coupled with the anchor via an anchor linkage and is operably coupled with the roller bracket via a roller linkage,
wherein preferably the roller linkage includes a synchronization shaft and a cable coupling the handle with the synchronization shaft.

4. The seat assembly of any of claims 2 or 3, further comprising a slider slidably coupled with the seat frame and movable to actuate the anchor;
wherein the anchor linkage comprises:
a cam coupled to the handle,
a first lever rotatably coupled to the seat frame,
a rod coupled to the first lever,
a second lever coupled to the rod, and
a third lever coupled to the second lever and movable to engage the slider.

5. The seat assembly of claim 4, wherein the cam comprises a variable diameter section and a constant diameter section;
in the first position of the roller bracket, the first lever is in contact with the variable diameter section; and
in the second position of the roller bracket, the first lever is in contact with the constant diameter section.

6. The seat assembly of claim 4 or 5, further comprising an electrical connector;
wherein the third lever is configured to cause rotation of the electrical connector.

7. The seat assembly of any of the preceding claims, wherein the roller bracket is rotatable relative to the seat frame about a first axis;
the roller is rotatable about a second axis relative to the roller bracket; and
the roller is rotatable with the roller bracket relative to the seat frame about the first axis, wherein preferably, in the second position of the roller bracket, the second axis is lower than the first axis.

8. The seat assembly of any of the preceding claims, further comprising a spring biasing the roller bracket toward the second position.

9. The seat assembly of claim 8, wherein a spring constant of the spring corresponds to a weight of the seat assembly,
and/or wherein the spring comprises a gas spring operably coupled with a synchronization shaft, the gas spring preferably being configured to support at least 70% and less than or equal to 90% of a weight of the seat assembly.

10. The seat assembly of any of the preceding claims, wherein a difference between the first position and the second position of the roller bracket is at least 25 degrees and less than or equal to 45 degrees.

11. The seat assembly of any of the preceding claims, wherein:
the seat frame includes a first side member and a second side member laterally spaced from the first side member;
the roller bracket is a first roller bracket coupled to the first side member;
the roller is a first roller;
the seat assembly further comprises:
a second roller bracket rotatably coupled to the first side member,
a second roller rotatably coupled to the second roller bracket,
a third roller bracket rotatably coupled to the second side member,
a third roller rotatably coupled to the third roller bracket,
a fourth roller bracket rotatably coupled to the second side member, and
a fourth roller rotatably coupled to the fourth roller bracket; and
the first roller bracket, the second roller bracket, the third roller bracket, and the fourth roller bracket are operably coupled together.

12. A track assembly, comprising:
a first track including a first upper surface with a first gap;
a second track including a second upper surface with a second gap; and
the seat assembly of claim 11;
wherein, in the first position of the first roller bracket:
the first side member is disposed partially in the first track,
the first roller and the second roller are disposed partially in the first gap and in contact with the first upper surface,
the second side member is disposed partially in the second track, and
the third roller and the fourth roller are disposed partially in the second gap and in contact with the second upper surface; and
in the second position of the first roller bracket:
the first side member is disposed above the first track, and
the second side member is disposed above the second track.

13. The track assembly of claim 12, wherein the first roller bracket includes a lift surface;
in the first position of the first roller bracket, the lift surface is offset from the first track; and
in the second position of the first roller bracket, the lift surface extends across the first gap and is in contact with the first upper surface.

14. The track assembly of claim 12 or 13, wherein, in the first position of the first roller bracket, the seat frame is disposed at a first height relative to the first track; and
in the second position of the first roller bracket, the seat frame is disposed at a second height relative to the first track that is greater than the first height,
wherein preferably a height difference between the first height and the second height is at least 30 mm and less than or equal to 50 mm.

15. A vehicle comprising the track assembly of any of claims 12 to 14.
